# EUROPEAN PATENT APPLICATION

(11) **EP 3 572 709 A1**
(43) Date of publication of application: **27.11.2019**
(21) Application number: 19749166.5
(22) Date of filing: 18.03.2019
(51) Int. Cl.: F16T 1/00

(54) **CONDENSATE DISCHARGE DEVICE**

(30) Priority: 27.03.2018 JP 2018060164
(71) Applicant: Z Engineering CO., LTD, Tokyo 133-0057 (JP)
(72) Inventor: The designation of the inventor has not yet been filed
(74) Representative: Zimmermann, Tankred Klaus
(86) International application number: PCT/JP2019/011288
(87) International publication number: WO 2019/188528

(57) **Abstract**

Provided are a condensate drain apparatus highly adaptable to an increase and decrease in drain discharge rate while preventing clogging of orifice hole, and a condensate discharge method. A condensate drain apparatus 1 includes orifice units each having an orifice and a decompression chamber provided downstream of the orifice arranged in series and in multiple stages. Each orifice unit 10U includes an orifice plate 12P with an orifice hole 11h having a diameter of 1 mm or more and formed in a thin plate shape, and a decompression plate 14P having a thickness the same as the orifice plate 12P and having the decompression chamber 14S formed therein. The orifice holes 11h adjacent in an axial direction are formed and arranged shifted in a radial direction from each other.

## Description

### TECHNICAL FIELD

The present invention relates to a condensate drain apparatus, and specifically relates to an orifice-type condensate drain apparatus, which is attached to, for example, a steam transfer pipe such as a steam pipe, or a steam heating device such as a heat exchanger, a dryer and an air conditioner, and discharges and removes steam condensate (steam condensate water) through an orifice after latent heat release.

### BACKGROUND ART

The orifice-type condensate drain apparatus is conventionally known in which an orifice set to discharge the condensate (hereinafter also referred to as drain) at a specified pressure is incorporated, from advantages that there is no need for a movable member such as an operating valve, durability is very high and no steam leakage occurs due to deterioration of a valve portion. In such an orifice-type condensate drain apparatus, it is necessary to set an orifice hole diameter smaller (for example, 0.5 mmφ) than a valve-type condensate drain apparatus depending on a planned discharge flow rate of drain, and clogging by foreign matter is likely to occur in an orifice hole. On the other hand, in order to prevent the clogging by foreign matter, the orifice hole diameter needs to be set large (at least 1 mmφ or more), but live steam containing latent heat tends to leak. Therefore, it was necessary to produce many types of orifices depending on a drain discharge rate.

Therefore, the condensate drain apparatus has been proposed in which a plurality of orifices is arranged in series and in multiple stages and depressurized stepwise to prevent the steam leakage and the clogging of the orifice hole (for example, see Patent Literatures 1 to 3).

Patent Literature 1 discloses the condensate drain apparatus in which the plurality of orifices is arranged in series in a valve chamber and central axes of the plurality of orifices are eccentric in an arrangement direction.

Patent Literature 2 discloses the condensate drain apparatus in which the central axes of the plurality of orifices arranged in series in the valve chamber are eccentric in the arrangement direction, and a plate-like or strip-like temperature responsive element is disposed opposite to each orifice.

Patent Literature 3 discloses the condensate drain apparatus in which the central axes of the plurality of orifices arranged in series in the valve chamber are eccentric in the arrangement direction, and a rolling member rollable by fluid passing through the orifice is disposed in each orifice through the orifice.

### CITATION LIST

### PATENT LITERATURE

Patent Literature 1: JP-A-2001-027389
Patent Literature 2: JP-A-2001-027390
Patent Literature 3: JP-A-2001-027391

### SUMMARY OF THE INVENTION

### PROBLEMS TO BE SOLVED BY THE INVENTION

An amount of drain passing through the orifice (orifice discharge capability) is generally determined by a differential pressure and the orifice hole diameter, but for example, there is a problem that the related art described in Patent Literature 1 cannot flexibly respond to an increase and decrease in discharge flow rate of the drain.

For example, when applied to the steam heating device (system) having a large variation in drain discharge rate, a multi-stage orifice of the same diameter cannot follow variation of the drain, for example, from the time of startup to the time of steady state, and when the amount of drain is less than about half of the orifice discharge capability, there is a problem that the orifice hole cannot be completely sealed and steam leakage occurs. On the other hand, in order to prevent steam leakage and ensure stable drain discharge capability in steady state, it is necessary to reduce the drain discharge capability at the time of startup, which causes a problem that it takes time for startup.

Further, the related art described in Patent Literatures 2 and 3 impairs the advantage of the orifice-type condensate drain apparatus that the movable member is not required at all, and there is a problem that durability and maintainability are reduced in addition to the problems described above.

That is, in the related art disclosed in Patent Literatures 1 to 3, there is a problem that since a variation range of the drain discharge rate which can be applied (dealt with) by the orifice hole of the same diameter is small (usually up to 50% of the maximum discharge rate), the orifice discharge capability cannot sufficiently follow the increase and decrease in the drain from the time of startup to the time of steady state, and eventually the orifice hole diameter is changed depending on the drain discharge rate or it takes time for startup to the steady state.

Therefore, the present invention has been made in view of the problems of the related art as described above, and an object of the present invention is to provide inexpensively by a simple method the condensate drain apparatus highly adaptable to the increase and decrease in the drain discharge rate while preventing the clogging of the orifice hole.

### SOLUTION TO THE PROBLEMS

In order to achieve the above object, a condensate drain apparatus according to the present invention is the condensate drain apparatus in which orifice units each having an orifice and a decompression chamber provided downstream of the orifice are arranged in series and in multiple stages. Each orifice unit includes an orifice plate having an orifice hole of a diameter of 1 mm or more and formed in a thin plate shape, and a decompression plate having a thickness equivalent to that of the orifice plate and having the decompression chamber formed therein. The orifice holes adjacent in an axial direction are formed and arranged shifted in a radial direction from each other.

In such a configuration, it is possible to discharge and remove condensate stably over time from the time of startup to the time of steady state while preventing the clogging of the orifice holes.

Further, each of the orifice holes is formed to have the same diameter, each of the decompression chambers is formed to have the same volume, and the orifice holes of first and final stage orifice units are arranged at a center, while the orifice holes of intermediate orifice units are arranged eccentrically, and adjacent intermediate orifice holes are arranged to have arrangement phases shifted by 180° from each other.

In such a configuration, an apparent flow channel length can be secured to a maximum, and an axial direction can be shortened with multiple stages.

Each of the orifice holes is formed to have the same diameter, each of the decompression chambers is formed to have the same volume, and formation positions of the orifice holes adjacent in an axial direction are arranged alternately and repeatedly in a manner of center, eccentric, center ---.

In such a configuration, it is not necessary to adjust a phase shift of the orifice hole, and a constant flow channel length can be secured to contribute to stabilization of drain discharge capability.

The most downstream orifice hole may be formed and disposed in the center.

In such a configuration, it is possible to prevent erosion on downstream piping and the like in advance.

The most upstream orifice hole may be formed and disposed in the center or eccentrically below the center.

In such a configuration, the orifice hole can be reliably sealed by the drain to stably prevent steam leakage.

In the above, a ratio of a volume of the decompression chamber to an opening volume of the orifice hole may be set to 30 to 200.

In such a configuration, axial shortening can be further achieved to contribute to downsizing of the apparatus and improvement in piping workability.

The orifice plate and the decompression plate may be formed of stainless steel having a thickness of 1 to 2 mm, and may be connected by axial pressure.

In such a configuration, it is possible to significantly improve workability at the time of assembly and maintenance, and to easily respond to the increase and decrease of the orifice units on site.

### EFFECTS OF THE INVENTION

According to the present invention, while an orifice having a large opening diameter can be adopted, and the clogging of the orifice hole can be prevented in advance, the condensate can be stably discharged and removed from the time of startup to the time of steady state.

### BRIEF DESCRIPTION OF THE DRAWINGS

Fig. 1 is a schematic view showing a structure of a condensate drain apparatus according to an embodiment of the present invention.
Figs. 2A and 2B are schematic views showing structures of orifice plates according to the present invention, Fig. 2A is a schematic view showing a central orifice plate, and Fig. 2B is a schematic view showing an eccentric orifice plate.
Fig. 3 is a schematic view showing a state at the time of steady state in the condensate drain apparatus according to an embodiment of the present invention.
Fig. 4 is a schematic view showing a state at the time of startup in the condensate drain apparatus according to the embodiment of the present invention.
Fig. 5 is a schematic view showing the condensate drain apparatus of a conventional structure used for comparison and verification with the condensate drain apparatus according to the embodiment.
Fig. 6 is a schematic view showing a structure of another embodiment of the condensate drain apparatus according to the present invention.

### DESCRIPTION OF THE EMBODIMENTS

### <Embodiment 1>

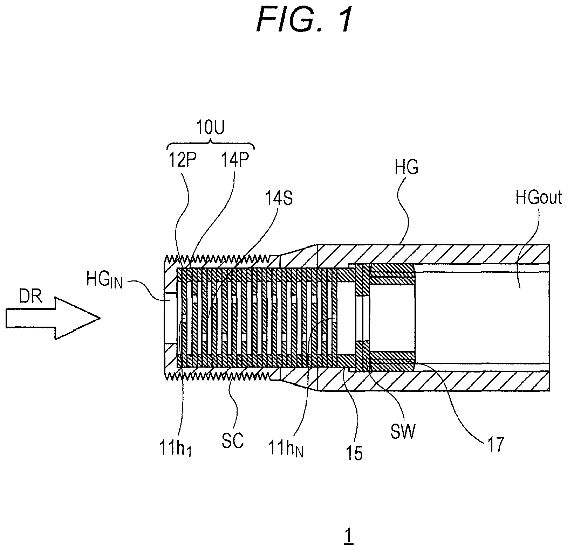

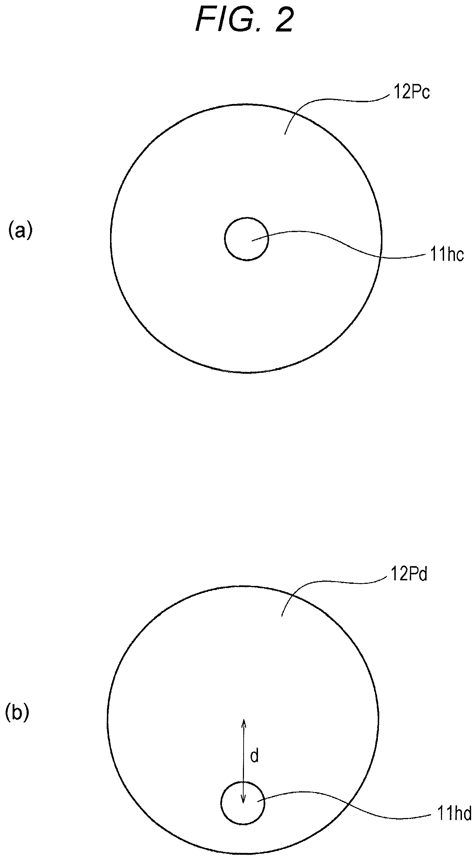

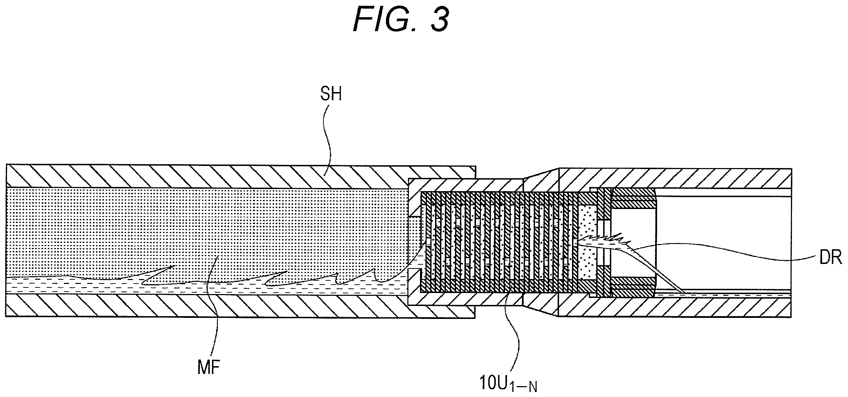

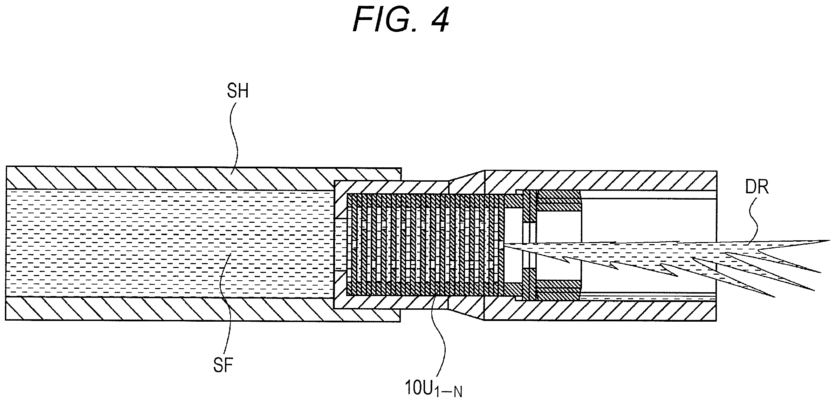

Hereinafter, an embodiment of a condensate drain apparatus according to the present invention will be described with reference to the drawings. Fig. 1 is a schematic view showing a structure of the condensate drain apparatus according to the present embodiment, Figs. 2A and 2B are schematic views showing structures of orifice plates, Fig. 3 is a schematic view showing a steady state of the condensate drain apparatus, and Fig. 4 is a schematic view showing a startup state of the condensate drain apparatus.

The condensate drain apparatus according to the present embodiment is an apparatus, which is used in various steam heating devices such as a heat exchanger, a dryer, and an air conditioner, using steam as a heat source, to minimize steam leakage and to remove condensate from the device. The condensate drain apparatus is attached to a stage subsequent to (downstream of) the steam heating device (not shown), and an orifice is provided in the middle of a condensate channel formed inside the condensate drain apparatus. Then, drain, that is, the condensate is discharged out of the device through the orifice by a differential pressure.

Specifically, as schematically shown in Fig. 1, in a condensate drain apparatus 1 according to the present embodiment, a plurality of orifice units 10U_{1-N} is arranged in series in a hollow cylindrical housing HG to discharge condensate DR introduced to an input side to the outside of the apparatus without leaking live steam. In the present embodiment, a screw SC is formed to be screwed and attached to an existing pipe or the like on an outer periphery of the housing HG.

Each orifice units 10U_{1-N} includes a plate-like (a disc-shaped in this example) orifice plate 12P_{1-N} having orifice holes 11h_{1-N} of the same diameter, and a hollow disk-shaped decompression plate 14P_{1-N} having an outer diameter equivalent to that of the orifice plate 12P_{1-N} and forming a decompression space (decompression chamber) 14S_{1-N} at a stage subsequent to the orifice plate 12P_{1-N}. In the present embodiment, the orifice units 10U_{1-N} are arranged in series and in multiple stages (multistage) along a condensate discharge channel formed in the housing HG.

As schematically shown in Figs. 2A and 2B, the orifice plates 12P include two types of a central orifice plate 12Pc (see Fig. 2A) having an orifice hole (hereinafter also referred to as a central orifice hole 11hc) formed to be opened at its center, and an eccentric orifice plate 12Pd (see Fig. 2B) having an orifice hole (hereinafter also referred to as an eccentric orifice hole 11hd) formed to be opened on its circumference (on a circumference of a separation distance d from the center). An orifice opening diameter is formed to have the same diameter φ of 1 to 2.5 mm (in the present embodiment, 1.5 mmφ).

Each decompression plate 14P_{1-N} has an outer diameter equivalent to that of the orifice plate 12P_{1-N}, and is formed of a ring-shaped seal washer (ring washer), to set up a decompression space (decompression chamber) 14S_{1-N} having the same volume with the same opening diameter (14.00 mmφ in this example).

In the present embodiment, both of the orifice plate 12P_{1-N} and the decompression plate 14P_{1-N} are thin stainless steel plates, and are formed to the equivalent thickness (1 mm in this example). Thus, since the orifice plate 12P_{1-N} and the decompression plate 14P_{1-N} are formed of separate plate-like members of the same material and the same thin thickness, the orifice plate 12P_{1-N} and the decompression plate 14P_{1-N} can be integrally displaced (deformed) in the same direction even when an unexpected load is applied in an axial direction. Thus, it is possible to maintain sealing properties stably over the years with respect to changes in discharge flow rate of the drain from the time of startup to the time of steady state without separately providing a sealing member such as a gasket, as compared to a conventional structure in which the decompression space and the orifice hole are integrally formed.

The thicknesses of the orifice plate 12P_{1-N} and the decompression plate 14P_{1-N} are preferably 1 to 2 mm. Because, if they are 1 mm or less, their strength is insufficient, and if they are 2 mm or more, followability (adaptability) to the changes in discharge flow rate of the drain, and piping workability along with increase in axial length are reduced.

Further, in the present embodiment, a final stage orifice unit 10U_{N} is axially pressed and supported by a spring washer SW via a hollow cylindrical collar 15.

In this manner, with a simple structure in which each orifice unit 10U_{1-N} is formed by the orifice plate 12P_{1-N} and the decompression plate 14P_{1-N} having the same diameter and the same thickness, and is pressed (pressurized) and supported in the axial direction by the spring washer SW, it is possible to significantly improve workability at the time of assembly and maintenance. In addition, it is also possible to easily respond to an increase and decrease of the orifice units 10U_{1-N} and replacement to different orifice diameters on site. Note that reference numeral 17 denotes a bushing for supporting the spring washer SW.

Further, in the present embodiment, the orifice holes 11h_{1-N} of the adjacent orifice units 10U_{1-N} are formed and arranged shifted (eccentrically) in a radial direction from each other so as not to be arranged on the same straight line in a condensate flow channel direction (hereinafter, axial direction).

Specifically, the central orifice plate 12Pc is disposed in a first stage (most upstream) orifice unit 10U₁. Although the eccentric orifice plate 12Pd may be disposed, it is preferable to adjust an arrangement phase so that the eccentric orifice hole 11hd is positioned below the center in this case. Thus, the orifice holes 11h can be more reliably sealed by introduced drain DR, to prevent the steam leakage in advance.

Further, the central orifice plate 12Pc is disposed on a most downstream (discharge side) orifice unit 10U_{N}. Thus, the drain DR can be discharged from the center, to suppress erosion on downstream piping and the like.

On the other hand, the eccentric orifice plates 12Pd are arranged in the middle orifice units 10U_{2-(N-1)}, and the adjacent eccentric orifice plates 12Pd are adjusted and arranged so that positions of the eccentric orifice holes 11hd are shifted by 180° from each other. Thus, a flow channel length can be secured to the maximum (an apparent flow channel length can be increased). Note that a phase difference between the eccentric orifice holes 11hd of the adjacent eccentric orifice plates 12Pd is preferably at least ±90° or more.

In this manner, the orifice holes 11h_{1-N} adjacent in the axial direction are formed and arranged shifted (eccentrically) in the radial direction from each other to form a complicated flow channel, and so-called labyrinth effect can be enhanced in which pressure loss of fluid to be leaked out is increased, and an amount of leakage is reduced to improve the sealing properties. In addition, since the apparent flow channel length can be increased, the axial length of multi-stage orifice units 10U_{1-N} can be shortened to improve workability of connection to piping and the like.

Further, by setting the thickness of the decompression plates 14P_{1-N} thin within a predetermined range (shortening a depth of the decompression chambers 14S_{1-N}), it is possible to prevent generation of turbulent flow (vortex flow, spiral flow) in the decompression space due to single layer fluid SF at the time of startup to accelerate rapid discharge of the drain DR, and to reduce length in a depth direction to contribute to improve the piping workability and downsizing of the apparatus.

In the condensate drain apparatus according to the present embodiment configured as described above, in the steady state in which the condensate introduced from a steam heating device SH reaches a saturation temperature, as schematically shown in Fig. 3, two-layer mixed fluid (gas-liquid two-layer mixed fluid in which saturated vapor and saturated condensed water are mixed) MF is introduced to an input side HG_{IN}. Each time the two-layer mixed fluid MF passes through the orifice units 10U_{1-N}, the pressure drops at equal intervals, the saturation temperature is reduced, and flash vapor fV is generated between the adjacent orifice units 10U_{1-N}. Thus, a sealing effect by the flash vapor fV is improved, and the drain in the steady state can be discharged stably.

On the other hand, in the startup state in which the condensate introduced from the steam heating device SH is less than the saturation temperature, as schematically shown in Fig. 4, the single layer fluid (condensate below the saturation temperature) SF is introduced in the input side HG_{IN}. Then, in the condensate drain apparatus according to the present invention, in which the axial length is shortened and formed in multiple stages as compared to the related art, the inventors of the present invention have found that the orifice holes 11h_{1-N} of the orifice units 10U_{1-N} are water-sealed by non-saturated drain (the single layer fluid SF). Thus, for example, in the case of startup state in which a drain temperature is significantly lower than the saturation temperature, it was found that since the flash vapor fV is not generated even when passing through the orifice units 10U_{1-N}, the multistage orifice units 10U_{1-N} substantially functions in the same way as a one-stage orifice unit 10U₁ and smoothly responds to (automatically follows) a sudden drain increase at the time of startup (cold start) and the like, so that a response range can be extended.

Next, comparative verification was conducted to define an appropriate relationship between the orifice hole and the decompression chamber using the condensate drain apparatus 1 according to the present embodiment and the condensate drain apparatus of the conventional structure. Verification results will be described below as Examples and Comparative Examples (the conventional structure).

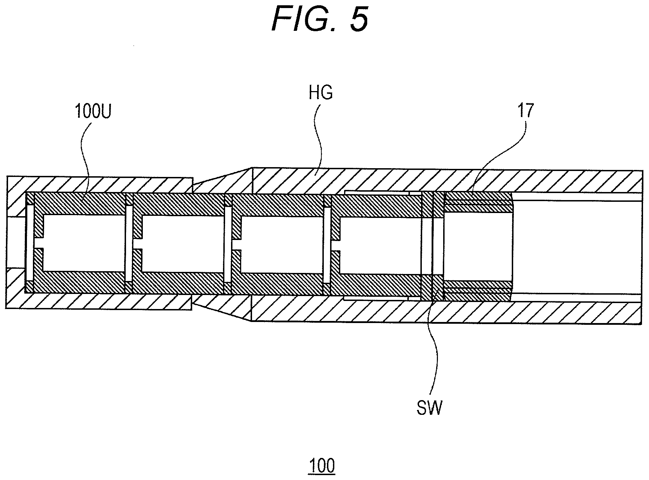

Here, as the condensate drain apparatus of the conventional structure, a condensate drain apparatus 100 of the conventional structure (orifice units 100U₁₋₄ integrally formed with the central orifice hole and the decompression chamber, each unit having an axial length of 12 mm) as schematically shown in Fig. 5 was used in order to stably secure drain discharge capability at the time of steady state.

### <Example 1-1>

When it was set such that the diameter of the orifice hole 11h: 1.0 mmφ, the thickness of the orifice plate 12P: 1.0 mm, the opening diameter of the decompression plate 14P: 14.0 mmφ, the thickness of decompression plate 14P: 1.0 mm, and the number of orifice stages N: 16 stages (axial length: 32 mm), a drain discharge rate equivalent to that of the condensate drain apparatus of the conventional structure of 0.5 mmφ×4 stages (axial length: 48 mm) was obtained at the time of steady state. Then, in the condensate drain apparatus according to the present embodiment, it was confirmed that it was possible to discharge the drain DR stably and smoothly without causing the steam leakage upon an increase and decrease in the drain DR from the startup state to the steady state (also smoothly respond to a sudden increase in the drain particularly at the time of startup and the like). On the other hand, in the condensate drain apparatus of the conventional structure, clogging due to usage over time and an increase in startup time were observed (Comparative Example 1-1).

That is, in the condensate drain apparatus according to the present embodiment, even when the axial length was reduced to about 66% as compared to the conventional structure while the hole diameter was enlarged by four times in an orifice opening area to prevent the clogging, the stable drain discharge capability was obtained from the time of startup to the time of steady state.

A ratio R of a decompression space volume to an orifice opening volume at this time was R = π/4×14²×1:π/4×1.0²×1 = 196.

### <Example 1-2>

When it was set such that the diameter of the orifice hole 11h: 1.5 mmφ, the thickness of the orifice plate 12P: 1.0 mm, the opening diameter of the decompression plate 14P: 14.0 mmφ, the thickness of the decompression plate 14P: 1.0 mm, and the number of orifice stages N: 20 stages (axial length: 40 mm), the drain discharge rate equivalent to that of the condensate drain apparatus of the conventional structure of 0.7 mmφ×4 stages (axial length: 48 mm) was obtained at the time of steady state. Then, in the condensate drain apparatus according to the present embodiment, it was confirmed that it was possible to discharge the drain DR stably and smoothly without causing the steam leakage upon the increase and decrease in the drain DR from the startup state to the steady state (also smoothly respond to the sudden increase in the drain particularly at the time of startup and the like). On the other hand, in the condensate drain apparatus of the conventional structure, the clogging due to the usage over time and the increase in startup time were observed (Comparative Example 1-2).

That is, in the condensate drain apparatus according to the present embodiment, even when the axial length was reduced to about 83% as compared to the conventional structure while the hole diameter was enlarged by 4.6 times in an orifice opening area to prevent the clogging, the stable drain discharge capability was obtained from the time of startup to the time of steady state.

The ratio R of the decompression space volume to the orifice opening volume at this time was R = π/4×14²×1:π/4×1.5²×1 ≈ 87.

### <Example 1-3>

When it was set such that the diameter of the orifice hole 11h: 1.5 mmφ, the thickness of the orifice plate 12P: 1.0 mm, the opening diameter of the decompression plate 14P: 14.0 mmφ, the thickness of the decompression plate 14P: 1.0 mm, and the number of orifice stages N: 16 stages (axial length: 32 mm), the drain discharge rate equivalent to that of the condensate drain apparatus of the conventional structure of 0.8 mmφ×4 stages (axial length: 48 mm) was obtained at the time of steady state. Then, in the condensate drain apparatus according to the present embodiment, it was confirmed that it was possible to discharge the drain DR stably and smoothly without causing the steam leakage upon the increase and decrease in the drain DR from the startup state to the steady state (also smoothly respond to the sudden increase in the drain particularly at the time of startup and the like). On the other hand, in the condensate drain apparatus of the conventional structure, the clogging due to the usage over time and the increase in startup time were observed (Comparative Example 1-3).

That is, in the condensate drain apparatus according to the present embodiment, even when the axial length was reduced to about 66% as compared to the conventional structure while the hole diameter was enlarged by about 3.5 times in an orifice opening area to prevent the clogging, the stable drain discharge capability was obtained from the time of startup to the time of steady state.

The ratio R of the decompression space volume to the orifice opening volume at this time was R ≈ 87.

When it was set such that the diameter of the orifice hole 11h: 3.0 mmφ, the thickness of the orifice plate 12P: 1.0 mm, the opening diameter of the decompression plate 14P: 14.0 mmφ, the thickness of the decompression plate 14P: 1.0 mm, and the number of orifice stages N: 20 stages (40 mm) (Comparative Example 1-4), the steam leakage was observed (R = π/4×14²×1:π/4×3.0²×1 ≈ 22). Note that when the diameter of the orifice hole 11h was set to 2.5 mmφ (Example 1-4), no steam leakage was observed (R = π/4×14²×1:π/4×2.5²×1 ≈ 31).

The verification results described above are summarized and shown in Table 1.

**[Table 1]**

| | Orifice volume (mm³) | | | Decompression chamber volume (mm³) | | | R | | |
|---|---|---|---|---|---|---|---|---|---|
| | Orifice diameter | Axial length | Volume element A | Decompression chamber diameter | Axial length | Volume element B | Volume ratio (B/A) | Remarks | Evaluation |
| Example 1-1 | 1 | 1 | 1 | 14 | 1 | 196 | 196.0 | | Good |
| Examples 1-2, 1-3 | 1.5 | 1 | 2.25 | 14 | 1 | 196 | 87.1 | | Good |
| Example 1-4 | 2.5 | 1 | 6.25 | 14 | 1 | 196 | 31.4 | | Good |
| Comparative Example 1-1 | 0.5 | 2 | 0.5 | 14 | 10 | 1960 | 3,920.0 | Clogging occurred, Startup time increased | Poor |
| Comparative Example 1-2 | 0.7 | 2 | 0.98 | 14 | 10 | 1960 | 2,000.0 | Clogging occurred, Startup time increased | Poor |
| Comparative Example 1-3 | 0.8 | 2 | 1.28 | 14 | 10 | 1960 | 1,531.3 | Clogging occurred, Startup time increased | Poor |
| Comparative Example 1-4 | 3 | 1 | 9 | 14 | 1 | 196 | 21.8 | Steam leakage occurred | Poor |

From the above, it was confirmed that the condensate drain apparatus can be obtained in which by setting the ratio R of the decompression space volume to the orifice opening volume to 30 to 200, the orifice opening area is enlarged by three times or more than the conventional one (the orifice diameter is preferably 1.0 to 2.5 mm, more preferably 1.0 to 1.5 mm) to prevent the clogging, while it is possible to shorten the axial length (downsizing) compared to the conventional one while significantly increasing the number of stages (16 to 20 stages), to improve the piping workability, to widely respond to variation of the drain from the time of the startup to the time of the steady state, and to discharge the drain stably.

### <Second Embodiment>

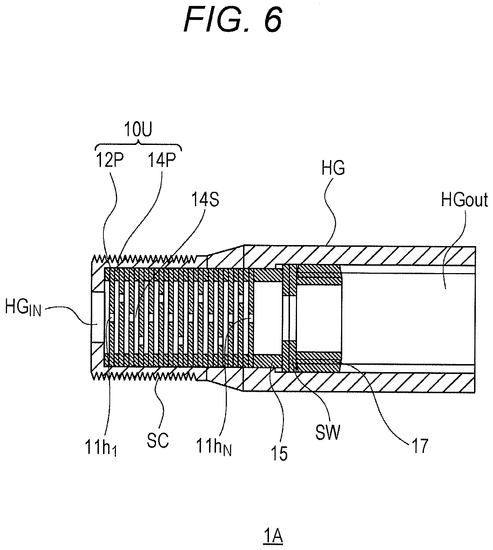

Next, another embodiment will be described with reference to Fig. 6. As compared with the condensate drain apparatus 1 according to the previous embodiment, in a condensate drain apparatus 1A according to the present embodiment, arrangement of the orifice holes is changed and phase adjustment of the adjacent orifice holes is not necessary, to improve assembling workability and the stability of the flow channel. Members having the same functions as those of the previous embodiment are denoted by the same reference numerals, and a detailed description thereof will be omitted.

As schematically shown in Fig. 6, the condensate drain apparatus 1A according to the present embodiment is configured such that in arrangement of the orifice plates 12P in the orifice units 10U_{1-N}, the central orifice plate 12Pc and the eccentric orifice plate 12Pd are alternately arranged.

Specifically, the central orifice plate 12Pc is disposed in the first stage (most upstream) orifice unit 10U₁, and subsequently, the eccentric orifice plate 12Pd and the central orifice plate 12Pc are arranged alternately and repeatedly. As in the previous embodiment, the central orifice plate 12Pc is disposed in the final stage (most downstream) orifice unit 10U_{N}. That is, in the condensate drain apparatus 1A according to the present embodiment, the central orifice plate 12Pc (central orifice hole 11hc) is interposed between the adjacent eccentric orifice plates 12Pd (eccentric orifice holes 11hd).

By forming and arranging the orifice holes 11h in this manner, it is possible to always secure the constant flow channel length while making a complicated phase adjustment work unnecessary when arranging the orifice holes 11h as compared with the previous embodiment, thereby realizing significant improvement in assembling workability, and securing more stable drain discharge capability over time.

In addition, as a result of comparing the condensate drain apparatus 1A according to the present embodiment thus configured with the condensate drain apparatus of the conventional structure, it was confirmed that substantially the same performance as that of the previous embodiment can be obtained more stably.

As described above, according to the condensate drain apparatus according to the present invention, by making a predetermined multi-stage structure, it is possible to enlarge the orifice hole diameter to prevents the clogging, and to stably discharge and remove the condensate against variations in an amount of drain from the time of startup when the condensate is in an unsaturated state to the time of steady state when the condensate reaches a saturated state.

Further, by setting a ratio of the decompression chamber volume to the orifice opening volume within a predetermined range, it is possible to shorten the axial direction with multiple stages, thereby improving the piping workability while extending a range responding to the variation of the drain.

The technical scope of the present invention is not limited to the above-described embodiments, but various changes or modifications can be made without departing from the gist of the present invention. For example, a separate bypass valve (control valve) may be provided for emergency response or the like.

### DESCRIPTION OF REFERENCE SIGNS

1, 1A: Condensate drain apparatus
10U: Orifice unit
11h: Orifice hole
11hc: Central orifice hole
11hd: Eccentric orifice hole
12P: Orifice plate
12Pc: Central orifice plate
12Pd: Eccentric orifice plate
14P: Decompression plate
14S: Decompression chamber
17: Bushing
DR: Drain
HG: Housing
HG_{IN}: Input side
MF: Two-layer mixed fluid
SC: Screw
SF: Single-layer fluid
SH: Steam heating device
SW: Spring washer

## Claims

1. A condensate drain apparatus in which orifice units each having an orifice and a decompression chamber provided downstream of the orifice are arranged in series and in multiple stages, wherein
each orifice unit comprises an orifice plate having an orifice hole of a diameter of 1 mm or more and formed in a thin plate shape, and a decompression plate having a thickness the same as the orifice plate and having the decompression chamber formed therein, and
each of the orifice holes is formed to have the same diameter, each of the decompression chambers is formed to have the same volume, and the orifice holes of first and final stage orifice units are arranged at a center, while the orifice holes of intermediate orifice units are arranged eccentrically, and adjacent intermediate orifice holes are arranged to have arrangement phases shifted by 180° from each other.

2. A condensate drain apparatus in which orifice units each having an orifice and a decompression chamber provided downstream of the orifice are arranged in series and in multiple stages, wherein
each orifice unit comprises an orifice plate having an orifice hole of a diameter of 1 mm or more and formed in a thin plate shape, and a decompression plate having a thickness the same as the orifice plate and having the decompression chamber formed therein, and
each of the orifice holes is formed to have the same diameter, each of the decompression chambers is formed to have the same volume, and formation positions of the orifice holes adjacent in an axial direction are arranged alternately and repeatedly in a manner of center, eccentric, center ---.

3. The condensate drain apparatus according to claim 1 or 2, wherein the most downstream orifice hole is formed and disposed in the center.

4. The condensate drain apparatus according to claim 2, wherein the most upstream orifice hole is formed and disposed in the center or eccentrically below the center.

5. The condensate drain apparatus according to any one of claims 1 to 4, wherein when a volume of the decompression chamber is B and an opening volume of the orifice hole is A, a volume ratio B/A is set to 30 to 200.

6. The condensate drain apparatus according to any one of claims 1 to 5, wherein the orifice plate and the decompression plate are formed of stainless steel having a thickness of 1 to 2 mm, and are connected by axial pressure.
